# EUROPEAN PATENT SPECIFICATION

(11) **EP 2 503 909 B1**
(45) Date of publication and mention of the grant of the patent: **16.10.2013**
(21) Application number: 10784834.3
(22) Date of filing: 24.11.2010
(51) Int. Cl.: A23N 17/00, A23K 1/18

(54) **METHOD FOR PREPARING AQUACULTURE FEED**
VERFAHREN ZUR HERSTELLUNG VON FUTTER FÜR AQUAKULTUREN
PROCEDE DE PREPARATION D'UN ALIMENT POUR LES AQUACULTURES

(30) Priority: 24.11.2009 GB 0920596
(43) Date of publication of application: 03.10.2012
(73) Proprietor: Seafarm Products AS, 5725 Vaksdal (NO)
(72) Inventor: AGA, Morten, N-5725 Vaksdal (NO)
(74) Representative: Ramsay, Laura Anne
(86) International application number: PCT/GB2010/002169
(87) International publication number: WO 2011/064538

(56) References cited:
- WO-A1-2009/112820
- WO-A2-02/28199
- GB-A- 2 232 573
- JP-A- 2002 262 847
- JP-A- 2003 092 999
- US-A- 6 136 353

## Description

This invention relates to a method for preparing aquaculture feed for administration to farmed aquatic animals and to apparatus for use in such a method.

In aquaculture, the cultured species, usually fish or shellfish, is normally fed with pellets containing the protein and lipid necessary for animal growth and survival. The feed pellets have to be produced, usually by extrusion, packaged and transported to the farmer before being fed to the cultured species. Such handling places the requirements that the pellets be durable and compact. Accordingly, even though aquatic species have little need of carbohydrate in their feed, aquaculture feed pellets routinely include starch or a starch-containing material, such as crushed (e.g. gritty, hammer-milled) plant seed, as a binder.

Feeding fish is unlike feeding land-based animals or birds. With the feed, marine fish also ingest saltwater and to maintain their ionic balance it is important that the feed pellets should contain water at lower salinity than sea water. Where feed pellets are hard, the fish will generally have to consume ambient water to ensure that the pellets soften and disintegrate sufficiently after ingestion - thus it is important that feed pellets be relatively soft before administration. This of course is in contradiction to the requirement for compactness and durability up to delivery to the farmer.

A further problem with hard compacted feed pellets is of course that they may sink through the base of any aquaculture holding cage and so be wasted. Moreover hard compact pellets may suffer from non-uniform water uptake on administration - the pellets become soft on the outside while remaining hard within. This may cause the fish to have to consume more salt water or may also contribute to waste as mentioned above.

Aquaculture in cold regions causes further problems particular to fish feed. The ambient temperature at which the feed pellets are stored may be below the freezing temperature of the water in the holding cages - placing cold feed pellets in the water may cause an ice layer to form around the pellets so reducing their efficacy in several ways. Thus iced-over hard pellets may be swallowed whole and excreted without being digested.

One response to these problems of aquaculture feed pellets has been to load the pellets with water, at the aquaculture operation site. This is described for example in WO02/28199 in which the pellets are placed in water, subjected to an underpressure to remove trapped air and then subjected to an overpressure to drive as much water as possible into the pellets which can then be administered.

It has been found (see WO2009/112820) that when this technique is applied to aquaculture feed pellets in which seed flour has been used as the binder, the ability of the pellet to soften and swell, i.e. to absorb fresh water so reducing the ionic balance problems for the fish, is significantly increased, e.g. by a factor of about 5 as compared with the use of crushed seed.

The apparatus described in WO02/28199 can operate only on a batchwise basis and is relatively energy inefficient as a powerful vacuum pump is needed.

We have now found that pelletised aquaculture feed may be water impregnated on a continuous or semi-continuous basis with a lower demand for a vacuum pump where the feed pellets are introduced into a water-circulating loop and exposing the pellets therein to pressure changes serving to impregnate the pellets with water.

Thus viewed from one aspect the invention provides a method of preparing pelletised aquaculture feed for administration to farmed aquatic animals which method comprises: causing water to circulate in a loop conduit; introducing aquaculture feed pellets into water circulating in said loop conduit whereby to expose said pellets to pressure changes and thereby cause said pellets to become water-impregnated; and retrieving water-impregnated aquaculture feed pellets from said loop conduit.

In the method of the invention, the feed pellets passing through the loop conduit are subjected to relatively low pressures (gas or water) and relatively high water pressures in order to facilitate rapid uptake of water into the pellets. This may be achieved in a range of ways, for example by having a relatively large water depth in the loop conduit (i.e. from the lowest to the highest water levels in the conduit as a whole thereby causing the pellets to undergo a relatively large change of height on circulating through the loop conduit), by repeatedly exposing the feed pellets to smaller variations in height (for example by passage through a loop conduit having a helical component with a substantially horizontal helix axis), by constricting flow within the conduit to cause the pellets to experience raised water pressures, or by application of suction to a headspace at a high point of the loop conduit. While the pressure exposure required will vary according to the feed pellets used and the precise form of the conduit, it can generally be stated that the sum of the pressure *increases* encountered from feed inlet to feed outlet is desirably at least 0.5 bar, preferably at least 1 bar, more preferably at least 1.5 bar, particularly at least 2 bar, more particularly at least 2.5 bar, especially at least 3 bar. In general the summed pressure increase is preferably below 10 bar, especially below 5 bar, particularly below 4 bar as the greater this summed increase is the greater the energy requirement for driving water circulation in the loop conduit. It will be appreciated that the sum of pressure increases is not the sum of pressure change as pressure *decreases* are not included in the sum. For any given apparatus, the sum of pressure increase may be calculated for the flow axis, i.e. the central line of water/pellet flow, through the loop conduit. Alternatively stated, the time integral (considering atmospheric pressure to be zero) of the periods of increasing and post-increasing above atmospheric pressure experienced by the pellets in the water from feed inlet to feed outlet is preferably at least 0.5bar.minute, preferably at least 1 bar.minute, more preferably at least 1.5 bar.minute, particularly at least 2 bar.minute, more particularly at least 2.5 bar.minute, especially at least 3 bar.minute. In any event, the water depth in the loop conduit is preferably at least 1 m, more especially at least 2m, particularly at least 5 m, more particularly at least 10m, especially at least 15m.

The water may be caused to circulate within the loop by various known means, e.g. by injecting water into the loop in the flow direction or, more preferably, by injecting gas into the conduit towards the base of an upflow section of the loop (thereby reducing the overall density of the fluid in the upflow section relative to the density in the downflow section). Where suction is applied at a high point of the loop conduit as mentioned above, this may generate a siphon effect to maintain circulation in the conduit. Where a loop conduit with more than one upflow section is used, e.g. a horizontal helix or an invaginated single vertical loop, such gas injection may be towards the base of a major upflow section of the loop or towards the base of two or more upflow sections. Likewise a pump or propeller drive may be placed at a convenient location in the loop, especially when an underpressure (e.g. an applied vacuum) is not being used as a component of the circulation drive. Where a pump or propeller drive is used, it is preferably located between the (upstream) section of the loop where water-impregnated pellets are removed and the (downstream) section where fresh pellets are introduced into the loop conduit so as not to damage the pellets in the conduit.

Where gas injection towards the base of an upflow section is used, a gas vent at or near the top of the upflow section will also generally be required. Where gas injection occurs only in one upflow section (e.g. the major upflow section in a single loop), such venting can generally be to the atmosphere. However, where gas injection occurs in multiple upflow sections, e.g. the loops of a horizontal helical section of the loop conduit, it may be desirable to apply suction, and not simply vent to the atmosphere, at the top of such upflow sections so as to maintain circulation.

Where gas injection towards the base of an upflow section is used, said gas is pressured gas, particularly compressed air from a compressor, said compressor typically operating at a pressure of about 10 bar.

In an especially preferred embodiment of the invention, a vacuum (i.e. suction) is applied to a headspace in the loop conduit downstream of the section where fresh pellets are introduced into the loop conduit and preferably at the top of the major downflow section of the conduit. In this way gas is removed from the feed pellets before water is forced into the pellets as they pass down to and past the base of the loop conduit. The gas pressure in this headspace may be from almost vacuum to atmospheric, i.e. 0-1 bar, however in practice a pressure of 0.01 to 0.90 bar, particularly 0.05 to 0.5 bar, especially 0.08 to 0.2 bar will be preferred. The effect of applying such a vacuum will also be to lift the water level in the major downflow section relative to that in the major upflow section thus increasing the demand on the system used to circulate the water in the loop and to reduce the pressure in the base of the loop. If 100% vacuum is applied, then absent any compensating system (e.g. gas or water injection as mentioned above) there would be a water level difference of about 10 metres. When a vacuum is applied to a headspace it is preferred that the water depth in the loop is at least 5 metres, particularly at least 10 metres, more particularly at least 20 metres, especially at least 25 metres, more especially at about 30 metres. While the water depth in the loop may be greater, the resulting energy demands are greater and there is little extra water impregnation of the pellets. Thus the water depth is preferably below 100 metres, e.g. below 85 metres, especially below 60 metres, particularly preferably below 50 metres, more especially below 40 metres.

The section of the loop at which fresh feed pellets are added is preferably at or near the top of the loop, e.g. within 10 metres vertically below any downstream headspace where a vacuum is to be applied. In this way the pressure within the loop where feed addition takes place may be at or near atmospheric thus allowing the pellets to be inserted with little energy demand and particularly allowing them to be inserted from an unpressurized reservoir. The feed pellets may be pumped in in water or blown in under gas pressure but particularly favourably they can be driven in using a rotating screw in an at least partially vertical side column, optionally associated with a pellet reservoir or hopper.

If the feed pellets are to be introduced into a pressurized part of the loop, e.g. upstream of a flow constraint, introduction may be continuous or, more preferably, batchwise, e.g. from a floodable, pressurizable hopper.

Upstream of the section of the loop conduit where pellets are added will be the section where the water-impregnated pellets are removed. Once again pellet removal may be effected in many ways, but most conveniently the pellet-containing water is passed over a screen or mesh capable of retaining the impregnated pellets. Such a screen or mesh will preferably be inclined and also preferably agitated to cause the retained pellets to move out of the circulating water flow. Most conveniently the loop is open to the atmosphere at this position. If desired some of the water flow may be removed with the impregnated pellets so that these may be flushed out to the aquatic animals they are to feed. Preferably however ambient water, e.g. sea water, is used for this purpose.

In another convenient embodiment, the pellet-containing circulating water may be caused to flow through a tilted porous conveyor belt which lifts the impregnated pellets out of the water flow for subsequent administration to the farmed aquatic animals. This may occur for example at an open section near the top of the loop.

Where a gas uplift is used to cause the water to circulate in the conduit, a gas vent will be required at or near the top of the main upflow section. The gas used may be air and gas venting may simply be into the atmosphere.

Unless water is pumped into the loop to drive the water around the loop, removal of impregnated pellets will reduce the water content of the loop and water addition, e.g. continuous or occasional, will be required. Water is thus conveniently added between the pellet removal and pellet addition sections of the loop. The water added will preferably be fresh water, optionally doped with further ingredients to be impregnated into the pellets, e.g. colorants, vitamins, minerals, lipids, proteins, medicines, and vaccines. The addition rate may be selected according to the level of doping desired. The rate of water addition may be controlled by placing a water level sensor in the loop, preferably between the pellet removal and pellet addition sections.

Thus, in the method of the invention, the pressure changes necessary to impregnate water into the feed pellets can be achieved in one of the following ways (or a combination thereof): by the use of a large height of water; by repeated use of smaller heights; by a prolonged residence time at high pressure; by exposure to suction to degas the pellets early on in their passage through the loop conduit; and by imposition of increased pressure other than by virtue of the head of water in the loop. Use of vacuum to degas feed pellets entering the loop and/or as part of the circulation drive can serve to increase the height requirement (or the number of loops in a helical arrangement) and with a single, optionally but preferably, invaginated vertical loop, the total loop height will generally be in the range 5 to 100m, e.g. 5 to 35m. In some installations, a vertical extension of the loop 5 or more meters above ground or sea level may not be problematic, however, in others it may be desirable to have much of the loop height below ground or sea level. In this way energy expenditure on providing feed pellets to the feed pellet inlet may be reduced, as may be the energy expenditure on providing a water feed into the loop or on providing a seawater feed to flush impregnated pellets out to the farmed animals.

In one preferred embodiment, as an invaginated vertical loop, the loop comprises, in the flow direction order, a major downflow section, a base transition section, a major upflow section with a gas injection port in its lower portion (e.g.near its base) a vent, a minor downflow section containing in order the pellet removal section, a water inlet port, and a level sensor, a upper transition section containing a pellet addition port, a minor upflow section, and a headspace containing a vacuum application port. In general the (maximum) water depth in the loop will be between the base transition section and the top of the major upflow section, i.e. the vertical displacement between the top of the major upflow section and the lowest point within the base transition section will generally be 1-100m, preferably at least 10m.

Where a headspace with a vacuum application port is provided, it is preferably 10 metres or less above the upper transition section. Even a relatively low power vacuum pump can then cause water to flow up and through the vacuum application section and to fall, with the pellets it is carrying, down into the major downflow section.

Especially where no vacuum is applied, the base of the loop may be bent into a substantially horizontal section, i.e. a section longer than the shortest distance between the bottom of the major downflow and major upflow sections. In this way, the residence time of the pellets at the maximum water pressure is increased and water impregnation may be improved.

In general, the flow time from the feed inlet to the feed outlet will preferably be 30 to 120 seconds. The flow rate is preferably 0.5 to 2 m/s. Typically therefore the conduit length between feed inlet and feed outlet is 20 to 200m, e.g. 20 to100 m, especially 30 to 75 m. The length of the conduit between feed outlet and feed inlet will of course depend on the format of the conduit between feed inlet and feed outlet. If desired, the conduit between feed outlet and feed inlet may be little more than a return pipe provided with a pump (and preferably also a water inlet for topping up the water in the conduit to compensate for the water absorbed by the pellets that are removed at the feed outlet).

Viewed from a further aspect the invention provides an aquaculture feed impregnation apparatus comprising a loop conduit capable of containing a circulating water flow and comprising a feed pellet injection port, a water circulation driver, a feed pellet retriever, and a water injection port, said loop being such that pellets travelling therethrough in water are exposed to water-uptake promoting pressure variations.

Preferably, the apparatus of the invention also comprises a vacuum application port at a transition point between an upflow section of the loop and a downflow section of the loop. Preferably also the apparatus comprises a water level sensor in a downflow section of the loop, particularly a sensor providing signals to a computer controlling water injection into the loop, e.g. to maintain the water content of the loop substantially constant.

In the apparatus, the water circulation driver is preferably a gas injection port located towards the base of the major upflow section of the loop and connected to a compressed gas source, e.g. an air compressor.

Preferred embodiments of the method and apparatus of the invention will now be described with reference to the accompanying drawings, in which:
Figure 1 is a schematic diagram of a first apparatus according to the invention having a vacuum applicator;
Figure 2 is a schematic diagram of an alternative apparatus according to the invention having a horizontal base extension of the loop circuit; and
Figure 3 is a schematic diagram of a third apparatus according to the invention having a helical component to the loop conduit.

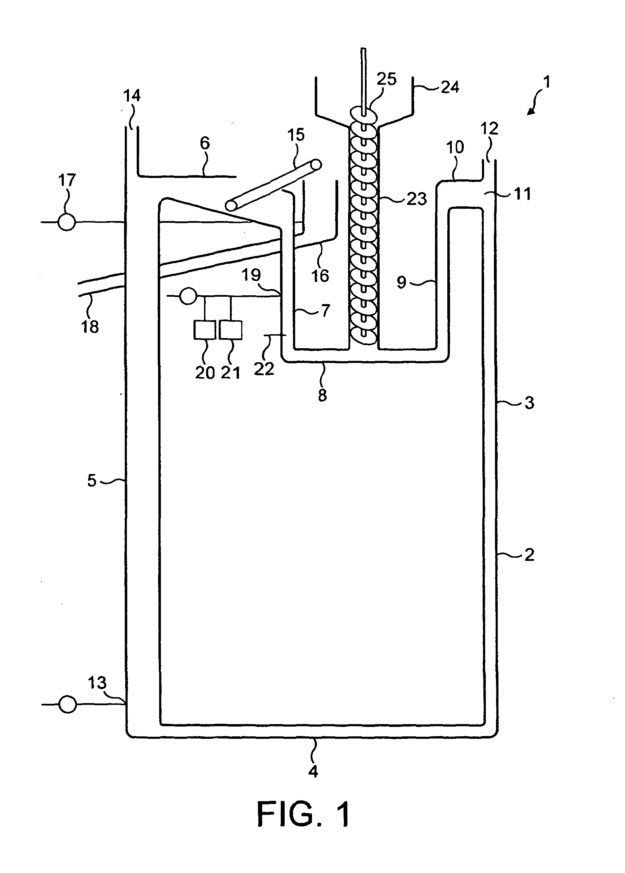

Referring to Figure 1 there is shown an apparatus 1 for water impregnating aquaculture feed pellets having a loop conduit 2 having in flow order: a major downflow section 3, a base transition section 4, a major upflow section 5, a first upper transition section 6, a minor downflow section 7, a second upper transition section 8, a minor upflow section 9, and a third upper transition section 10.

In the third upper transition section 10 is a headspace 11 having a vacuum port 12 attached to a vacuum pump (not shown). Near the base of major upflow section 5 is an injection port 13 attached to an air compressor (not shown). At the top of major upflow section 5 is a vent 14 allowing gas to vent to the atmosphere. In an open section of the first upper transition section 6 is disposed a porous conveyor belt 15 driven by a motor (not shown) which lifts water-impregnated feed pellets out of the loop conduit and deposits them in hopper 16. Ambient water is pumped into hopper 16 by pump 17 to flush the pellets down conduit 18 to a fish pen (not shown).

In the minor downflow section 7 is an inlet port 19 for fresh water, optionally doped with vitamins, colorants, etc from reservoirs 20, 21. Also within the minor downflow section is a water level sensor 22 linked to a computer (not shown) which controls the addition of water through inlet port 19.

In the second upper transition section 8 is a vertical side column 23 leading to a feed hopper 24 and optionally containing a screw drive 25 driven by a motor (not shown).

The vertical height from the top to the bottom of major upflow section 5 is 30 metres. The vertical height from the base of the second upper transition section to the base of the third upper transition section is less than 10 metres, e.g. 8 metres.

The internal diameter of the loop circuit is about 60 mm from the second upper transition section to the base transition section and about 80 mm in the major upflow section.

The loop conduit is preferably of plastics, e.g. polyethylene. In operation, the loop conduit is filled with fresh water through inlet port 19 (and optionally through additional inlet ports towards the top of the major upflow and downflow sections). Compressed air is then applied through injection port 13 and a 0.1 bar vacuum is applied through vacuum port 12. Once water circulation has stabilised, screw drive 25 is rotated to commence addition of feed pellets from hopper 24 into the loop conduit.

In operation, the flow rate through the loop is preferably in the range 0.5-2.0 m/s, especially about 1 m/s.

To terminate operation, feed addition is stopped and once no further water-impregnated feed pellets are being removed by conveyor belt 15, the gas injection, water injection and vacuum application may be halted.

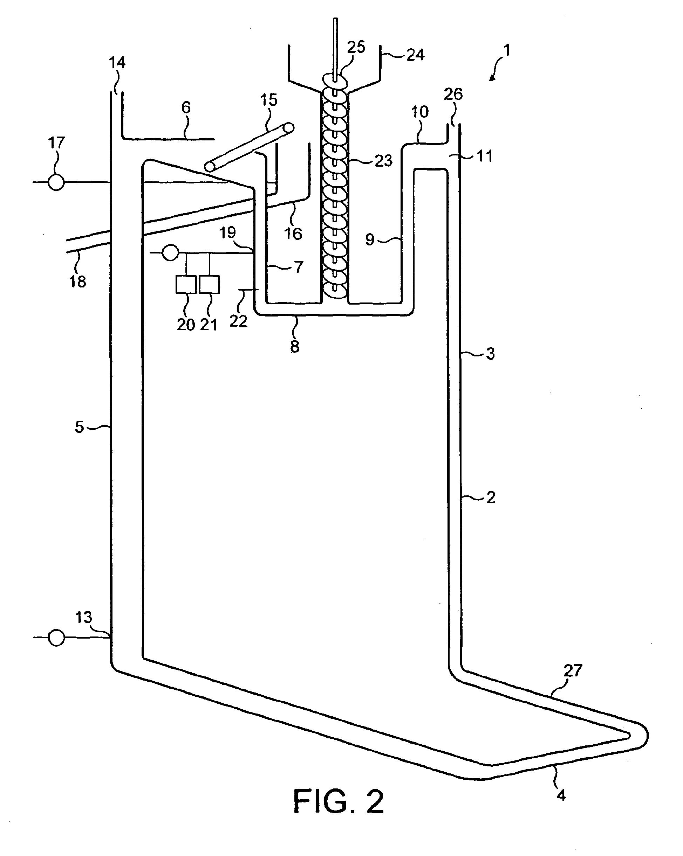

Referring to Figure 2, similar components of the apparatus are similarly numbered, however at the third upper transition section there is a gas vent 26 rather than a vacuum application port. The gas vent is to allow air to be vented from this section during start-up and may be attached to a vacuum pump to assist this. At the base of the loop conduit, the base transition section has a horizontally elongated section 27 to increase the pellet resistance time under maximum water pressure.

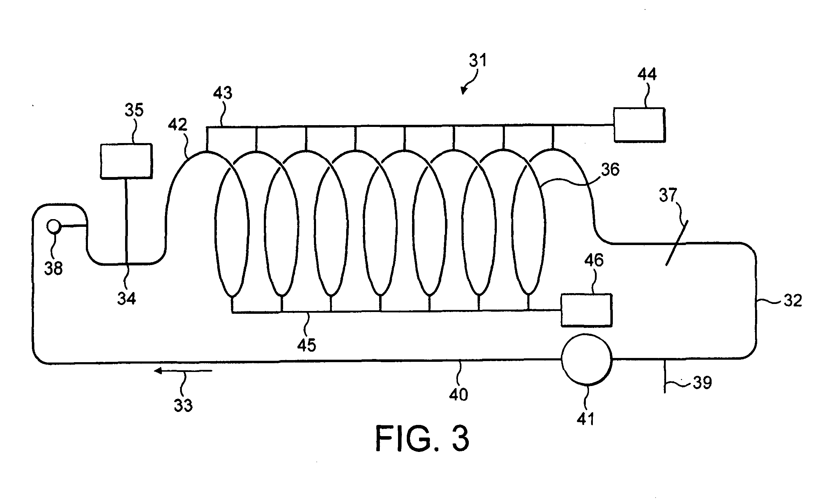

Referring to Figure 3, there is shown an alternative apparatus 31 comprising a loop conduit 32 with a flow direction as shown by arrow 33. The conduit has a feed inlet port 34 connected to feed hopper 35. Downstream of feed inlet port 34 is a horizontal helical section 36 of the conduit followed by feed outlet port 37. The feed inlet and outlet may be substantially as described for Figures 1 and 2. The conduit is also provided with a water level sensor 38 which serves to control water addition into the conduit through water inlet 39. The water inlet may be as described for Figures 1 and 2. To drive the water circulation in the conduit, the return portion 40 of the conduit is provided with a pump 41. At least the upper part of the first coil 42 of the helical section is preferably provided with a headspace to which suction may be applied via line 43 and suction pump 44. The upflow sections of the coils of the helical section may be provided with gas uplift through line 45 and compressor 46. If this is done however, the upper sections of these coils are preferably vented through line 43 and pump 44. With similar conduit diameters to those of Figures 1 and 2, the vertical height of the helical section may typically be 1 to 3 m and the axial length may be 3 to 6 m. If desired, the helix may be substantial rectangular in cross section and taller than it is broad.

Conventional feed pellets may be used in the apparatus of the invention. However, plant flour containing pellets as described in WO2009/112820 are preferably used.

## Claims

1. A method of preparing pelletised aquaculture feed for administration to farmed aquatic animals which method comprises: causing water to circulate in a loop conduit (2; 32); introducing aquaculture feed pellets into water circulating in said loop conduit (2; 32) whereby to expose said pellets to pressure changes and thereby cause said pellets to become water-impregnated; and retrieving water-impregnated aquaculture feed pellets from said loop conduit (2; 32).

2. A method as claimed in claim 1 wherein gas is injected into an upflow section (5; 45) of said loop conduit (2; 32) to facilitate water circulation within said loop conduit.

3. A method as claimed in either of claims 1 and 2 wherein suction is applied at the top of a downflow section (3; 43) of said loop conduit (2; 32) to cause water to syphon into said downflow section.

4. A method as claimed in claims 2 and 3 wherein said water-impregnated pellets are retrieved (15) from said loop conduit (2) between said upflow and downflow sections (5, 3) and wherein feed pellets are introduced (23, 24, 25) into said loop conduit (2) between the site of pellet retrieval (15) and said downflow section.

5. A method as claimed in any one of the preceding claims wherein the water depth in said loop conduit (2) is at least 10 metres.

6. An aquaculture feed impregnation apparatus comprising (1; 31) a loop conduit (2; 32∼) capable of containing a circulating water flow and comprising a feed pellet injection port (23; 34), a water circulation driver (12, 13; 44; 46), a feed pellet retriever (15; 37), and a water injection port (19; 39), said loop being such that pellets travelling therethrough in water are"exposed to water-uptake promoting pressure variations.

7. Apparatus (1) as claimed in claim 6 wherein said loop conduit (2) comprises in flow direction: a major downflow section (3); a base transition section (4; 4, 27); a major upflow section (5) provided in its lower portion with a gas injection port (13); a vent (14); a minor downflow section (7) provided in flow direction order with a pellet retriever (15), a water inlet port (19) and a level sensor (22); an upper transition section (8) provided with a feed pellet injection port (23); a minor upflow section (9); and a headspace (10) provided with a suction port (12).

8. Apparatus (1) as claimed in claim 7 wherein the vertical displacement of the top of said major upflow section (5) from the lowest point within said base transition section (4) is at least 10 metres.

9. Apparatus (31) as claimed in claim 6 wherein said loop conduit (32) comprises in flow direction: a feed inlet port (34), a horizontal helical section (36), a feed outlet port (37), and a return portion (40) provided with a pump (41).

10. Apparatus (31) as claimed in claim 9 wherein said helical section (36) is provided with a suction headspace.

## Patentansprüche

1. Verfahren zur Herstellung pelletisierter Aquakultur-Futtermittel für die Verabreichung an in Zuchtfarmen gehaltene Wassertiere, wobei das Verfahren Folgendes umfasst: Wasser zur zirkulation in einer Kreislaufleitung (2; 32) veranlassen; Einbringen von Aquakultur-Futtermittelpellets in Wasser, das in der Kreislaufleitung (2; 32) zirkuliert, wobei die Pellets Druckänderungen ausgesetzt werden und dadurch verursacht wird, dass die Pellets mit Wasser getränkt werden; und Entnehmen der mit Wasser getränkten Pellets aus der Kreislaufleitung (2; 32).

2. Verfahren nach Anspruch 1, wobei Gas in einen aufwärts durchströmten Abschnitt (5; 45) der Kreislaufleitung (2; 32) eingespeist wird, um die Wasserzirkulation in der Kreislaufleitung zu fördern.

3. Verfahren nach einem der Ansprüche 1 und 2, wobei oben an einem abwärts durchströmten Abschnitt (3; 43) der Kreislaufleitung (2; 32) ein Sog ausgeübt wird, um ein Einströmen des Wassers in den abwärts durchströmten Abschnitt zu bewirken.

4. Verfahren nach einem der Ansprüche 2 und 3, wobei die wassergetränkten Pellets entnommen werden (15) aus der Kreislaufleitung (2) zwischen den aufwärts und abwärts durchströmten Abschnitten (5,3) und wobei Futtermittelpellets eingebracht werden (23, 24, 25) in die Kreislaufleitung (2) zwischen der Stelle der Pelletsentnahme (15) und dem abwärts durchströmten Abschnitt.

5. Verfahren nach einem der vorhergehenden Ansprüche, wobei die Wassertiefe in der Kreislaufleitung (2) mindestens 10 Meter beträgt.

6. Tränkungseinrichtung für Aquakultur-Futtermittel (1; 31) die eine Kreislaufleitung (2; 32) aufweist, welche geeignet ist, einen zirkulierenden Wasserstrom zu enthalten und eine Futtermittelpelletseinspeiseöffnung (23; 24), einen Wasserkreislauf-Antrieb (12, 13; 44; 46), einer Futtermittelpelletsentnahmevorrichtung (15; 37) und eine Wassereinspritzöffnung (19; 39) aufweist, wobei der Kreislauf derart ist, dass Pellets, die sich dort hindurch im Wasser bewegen, Änderungen eines die Wasseraufnahme fördernden Druckes ausgesetzt sind.

7. Einrichtung (1) nach Anspruch 6, wobei die Kreislaufleitung (2) in Durchflussrichtung Folgendes aufweist: einen größeren, abwärts durchströmten Abschnitt (3); einen unteren Übergangsabschnitt (4; 4, 27); einen größeren aufwärts durchströmten Abschnitt (5), der in seinem unteren Bereich mit einer Einspeiseöffnung für Gas (13) versehen ist; eine Entlüftung (14); einen kleineren, abwärts durchströmten Abschnitt (7), der in einer der Durchströmungsrichtung folgenden Anordnung mit einer Pelletsentnahmevorrichtung (15), einer Wassereinlassöffnung (19) und einem Füllstandsensor (22) versehen ist; einen oberen Übergangsbereich (8), der mit einer Futtermittelpelletseinspeiseöffnung (23) versehen ist; einen kleineren, aufwärts durchströmten Abschnitt (9); und einen Kopfraum (10), der mit einer Ansaugöffnung (12) versehen ist.

8. Einrichtung (1) nach Anspruch 7, wobei die Höhenverschiebung von dem Oberteil des größeren, aufwärts durchströmten Abschnitts (5) von dem niedrigsten Punkt in dem unteren Übergangsabschnitt (4) mindestens 10 Meter beträgt.

9. Einrichtung (31) nach Anspruch 6, wobei die Kreislaufleitung (32) in Durchflussrichtung Folgendes aufweist: eine Futtermittel-Einspeiseöffnung (34), einen horizontalen spiralförmigen Abschnitt (36), eine Futtermittel-Auslassöffnung (37) und einen Rücklaufabschnitt (40), der mit einer Pumpe (41) versehen ist.

10. Einrichtung (31) nach Anspruch 9, wobei der spiralförmige Abschnitt (36) mit einem Ansaug-Kopfraum versehen ist.

## Revendications

1. Procédé de préparation d'aliments d'aquaculture en granulés pour une administration à des animaux aquatiques d'élevage, lequel procédé comprend : la mise en circulation de l'eau dans un conduit en boucle (2 ; 32) ; l'introduction de granulés d'aliment d'aquaculture dans de l'eau circulant dans ledit conduit en boucle (2 ; 32) afin d'exposer lesdits granulés à des changements de pression et d'amener ainsi lesdits granulés à s'imprégner d'eau ; et la récupération des granulés d'aliment d'aquaculture imprégnés d'eau depuis ledit conduit en boucle (2 ; 32).

2. Procédé selon la revendication 1, dans lequel du gaz est injecté dans une section de courant ascendant (5 ; 45) dudit conduit en boucle (2 ; 32) afin de faciliter la circulation d'eau dans ledit conduit en boucle.

3. Procédé selon l'une quelconque des revendications 1 et 2, dans lequel une aspiration est appliquée sur le dessus d'une section de courant descendant (3 ; 43) dudit conduit en boucle (2 ; 32) afin d'amener l'eau à siphonner dans ladite section de courant descendant.

4. Procédé selon les revendications 2 et 3, dans lequel lesdits granulés imprégnés d'eau sont récupérés (15) depuis ledit conduit en boucle (2) entre lesdites sections de courant ascendant et de courant descendant (5, 3) et dans lequel des granulés d'aliment sont introduits (23, 24, 25) dans ledit conduit en boucle (2) entre le site de récupération de granulé (15) et ladite section de courant descendant.

5. Procédé selon l'une quelconque des revendications précédentes, dans lequel la profondeur d'eau dans ledit conduit en boucle (2) est d'au moins 10 mètres.

6. Appareil d'imprégnation d'aliment d'aquaculture comprenant (1 ; 31) un conduit en boucle (2 ; 32) capable de contenir un écoulement d'eau de circulation et contenant un orifice d'injection de granulé d'aliment (23 ; 34), un élément d'entraînement de circulation d'eau (12, 13 ; 44 ; 46), un récupérateur de granulé d'aliment (15 ; 37), et un orifice d'injection d'eau (19 ; 39), ladite boucle étant telle que des granulés la traversant dans l'eau sont exposés à des variations de pression favorisant la capture d'eau.

7. Appareil (1) selon la revendication 6, dans lequel ledit conduit en boucle (2) comprend dans une direction d'écoulement : une section principale de courant descendant (3) ; une section de transition de base (4 ; 4, 27) ; une section principale de courant ascendant (5) pourvue dans sa portion inférieure d'un orifice d'injection de gaz (13) ; un évent (14) ; une section secondaire de courant descendant (7) disposée dans un ordre de direction d'écoulement avec un récupérateur de granulé (15), un orifice d'admission d'eau (19) et un capteur de niveau (22) ; une section supérieure de transition (8) pourvue d'un orifice d'injection de granulé d'aliment (23) ; une section secondaire de courant ascendant (9) ; et un espace libre (10) pourvu d'un orifice d'aspiration (12).

8. Appareil (1) selon la revendication 7, dans lequel le déplacement vertical du dessus de ladite section principale de courant ascendant (5) depuis le point le plus bas dans ladite section de transition de base (4) est d'au moins 10 mètres.

9. Appareil (31) selon la revendication 6, dans lequel ledit conduit en boucle (32) comprend dans une direction d'écoulement : un orifice d'admission d'aliment (34), une section hélicoïdale horizontale (36), un orifice de refoulement d'aliment (37), et une portion de retour (40) pourvue d'une pompe (41).

10. Appareil (31) selon la revendication 9, dans lequel ladite section hélicoïdale (36) est pourvue d'un espace libre d'aspiration.
